# EUROPEAN PATENT SPECIFICATION

(11) **EP 2 821 907 B1**
(45) Date of publication and mention of the grant of the patent: **01.07.2020**
(21) Application number: 13175069.7
(22) Date of filing: 04.07.2013
(51) Int. Cl.: G06F 3/0488, G06F 3/0482, H04B 1/38, B60R 11/02, H04M 1/60

(54) **Method and system for managing infotainment functionality**
Verfahren und System zur Verwaltung von Infotainment-Funktionalität
Procédé et système pour gérer une fonctionnalité d'informatique de loisir

(43) Date of publication of application: 07.01.2015
(73) Proprietor: Volvo Car Corporation, 40 531 Göteborg (SE)
(72) Inventor: Farmansson, Malin, 41305 Göteborg (SE); Tengstrand, Per, 41309 Göteborg (SE)
(74) Representative: Valea AB

(56) References cited:
- EP-A1- 1 049 347
- EP-A2- 2 786 889
- US-A1- 2008 103 612
- US-A1- 2010 220 250
- US-A1- 2011 257 958
- US-A1- 2012 226 732
- US-B1- 7 970 436

## Description

### TECHNICAL FIELD

The present disclosure relates to an infotainment management system and a method performed therein for managing infotainment functionality of an infotainment system of a vehicle to which a nomadic device is connected.

### BACKGROUND

The use of infotainment systems in vehicles and functionality development related thereto have increased rapidly in the last few years. An infotainment system is commonly known to refer to hardware/software products and systems which are built into, or can be added to vehicles, in order to enhance the vehicle occupant experience when it comes to providing audio and visual entertainment, as well as automotive navigation systems. This includes for instance playing media such as CDs, DVDs, and TV, as well as the incorporation of video game consoles into the vehicle. Infotainment systems of today are known to comprise one or several touch sensitive displays, also referred to as a touch screen, well known in the art. The touch sensitive displays are commonly utilized to display e.g. graphic, video, digital images, animations and text, and further utilized to display e.g. virtual buttons, menus, and other user-interface objects to thereby provide a user interface through which a vehicle occupant may interact with the infotainment system. The vehicle occupant may e.g. interact with the infotainment system by contacting the touch screen at locations corresponding to user-interface objects with which he or she wishes to interact.

On the other end, the use of handheld devices such as smart phones has increased rapidly in the last few years. Smart phones, for instance, may download various application programs ("applications", "apps") that operate on the phone. A user can utilize a user-interface of the phone to control the application and/or utilize the application in some way, such as watching the visual display or listening to the audio output.

Not surprisingly, extending applications from a handheld device to the vehicle has become a popular feature offered by various service providers and vehicle manufacturers. A handheld device connected to a vehicle is commonly referred to as a nomadic device, and include all types of information and communication as well as entertainment devices that can be brought into the vehicle by the driver to be used while driving. Current examples are mobile phones, portable computers, Pocket PCs, PDAs, mobile navigation devices, iPods, DVD Players and multi-functional smart phones. Examples of extending applications from a nomadic device to the vehicle include the connection of MP3 players, iPods being connected via USB connections, and mobile phones such as smart phones being connected via e.g. wireless connections. All of these provide methods to bring content to and from the vehicle and allow a vehicle occupant to have some connectivity with the vehicle. As a result, the vehicle occupant can take advantage of better user interface components offered by the infotainment system of the vehicle, for instance a larger screen and a higher quality audio output.

US 2013/0106750, for instance, relates to connection management between a handheld device and an in-vehicle head unit. The head unit and handheld device are configured in a manner such that the screen display of the handheld device is mirrored on a touch panel of the in-vehicle computer system and the handheld device is controlled remotely by the user using the touch panel of the in-vehicle computer system. However, although US 2013/0106750 provides a connection management solution for pairing communication devices with vehicles, the suggested solution merely mirrors the display of the handheld device on the touch panel of the in-vehicle head unit.

US 7970436 B1 discloses a wireless interface extension for mobile devices. The wireless interface extension includes a user interface, a wireless communication link, and a processor. The processor communicates with a mobile device over the wireless communication link and enables a user to use the user interface to interact with at least one user application on the mobile device.

US 20080103612 A1 discloses a communications system for a motor vehicle. The communications system includes: an interface for exchanging data between the communications system and a mobile telephone; a display with an assigned controller for displaying an image of the mobile telephone, the image including at least one control element, or for displaying a portion of an image of the mobile telephone, the portion of the image also having at least one control element; and a touch screen, which is located above the display and serves to operate the mobile telephone by touching the touch screen in the area of the displayed control element or by pressing upon the touch screen in the area of the displayed control element.

US 20110257958 A1 discloses a virtual phone which includes a touch screen mounted on an enclosure that includes a processor, memory, wireless communication port, and a power port. The virtual phone further includes a software application executing on the processor to control image display on the touch screen and emulate features of a handheld device presented in the image in response to a user touching a presented feature. The virtual phone further includes a configuration of a user-specific handheld device that is derived from the user-specific handheld device is stored in a memory that is accessible to the processor. The virtual phone presents a visual representation of the user-specific handheld device on the touch screen based on the configuration EP2786889 A2 discloses a vehicle information system for persisting application context from the vehicle information system to the mobile device. The mobile device provides access to at least one application executing on the mobile device to the vehicle information system. On termination of that access, an operating context is determined for each of the mobile device applications where possible. In some cases, where application context is persisted from one system or device to the other, the current data is presented in accordance with a transport modality associated with the other device or system.

EP2786889 A2 is a document under Article 54(3) EPC. It does not disclose displaying a portion of visual output associated with a a selected user application program running on a nomadic device on an additional display of a vehicle positioned in front of a driver of said vehicle.

### SUMMARY OF THE INVENTION

It is therefore an object of embodiments herein to provide an improved way of integrating a nomadic device with an infotainment system of a vehicle. According to a first aspect of embodiments herein, the object is achieved by a computer-implemented method according to claim 1. The method is performed by an infotainment management system for managing infotainment functionality of an infotainment system of a vehicle to which a nomadic device is connected, according to claim 9.

The infotainment management system displays, on a touch sensitive display associated with the infotainment system, one or several category user interface objects associated with respective infotainment functionality categories. The infotainment management system further displays, on said touch sensitive display, one or several linking user-interface objects simultaneously with at least one of said one or several category user interface objects, wherein the one or several linking user-interface objects are linking to one or several user application programs hosted on said nomadic device, wherein the user application programs are supported by said infotainment system. The infotainment management system determines selection detection of a selected linking object out of said linking objects for invoking a selected user application program hosted on said nomadic device and displays a portion of visual output associated with said selected user application program running on said nomadic device, on an additional display of said vehicle positioned in front of a driver of said vehicle.

Thereby, linking objects, such as e.g. interactive icons, linking to user application programs which are installed on the nomadic device and may be invoked by the linking objects, may be displayed on the in-vehicle touch sensitive display simultaneously with category objects, such as e.g. interactive virtual buttons, relating to other infotainment functionality such as e.g. in-vehicle navigation, music and/or telephony functionality. Displaying the linking objects in parallel with the category objects thus provide a display view illustrating not only the linking objects linking to supported nomadic user application programs, but additionally other available infotainment functionality options, e.g. related to in-vehicle infotainment. Accordingly, a potential vehicle occupant may be presented with a plurality of infotainment options at the same time, without him or her having to deactivate the view of the linking objects of the touch sensitive display in order to have other infotainment options displayed and subsequently selectable. Thereby, a potential vehicle occupant is presented with a high quality experience, while fewer user-interaction actions may be required to reach preferred infotainment options. There is hence provided a solution far from merely mirroring the display of the nomadic device on the touch sensitive display associated with the in-vehicle infotainment system.

For that reason, an improved way of integrating a nomadic device with an infotainment system of a vehicle is provided.

The technical features and corresponding advantages of the above mentioned method will be discussed in further detail in the following.

By introducing a method performed by an infotainment management system for managing infotainment functionality of an infotainment system of a vehicle to which a nomadic device is connected, a solution is provided which extends functionality of the nomadic device to the in-vehicle infotainment system. Thereby, a potential vehicle occupant can take advantage of better user interface components offered by the infotainment system of the vehicle, for functionality of the nomadic device. The referred to nomadic device is a commonly known term for a handheld device, e.g. portable electronic device, connected/connectable to the vehicle, which may include all types of information and communication as well as entertainment devices that can be brought into the vehicle by the vehicle occupant with the intention to be used e.g. while driving. Current examples comprise mobile phones, portable computers, Pocket PCs, PDAs, mobile navigation devices, iPods, DVD Players and/or multi-functional smart phones. Other examples may include a surf plate such as an iPad. The referred to infotainment system may refer to hardware/software products and systems which are built into, or can be added to the vehicle, in order to enhance the vehicle occupant experience when it comes to providing audio and visual entertainment, as well as automotive navigation systems. Additionally, the referred to infotainment functionality refers to both in-vehicle functionality, such as e.g. navigation, audio and visual entertainment, as well as integrated functionality of the nomadic device, such as e.g. user application programs hosted on the nomadic device. When it comes to the referred to vehicle, said vehicle may be any arbitrary vehicle, for instance an engine-propelled vehicle, such as e.g. a car, truck, lorry, van, bus, tractor, military vehicle, scooter, motorcycle, air plane, vessel such as e.g. a ship, and/or golf cart, or alternatively a rail-bound vehicle, such as e.g. a train or tram. The potential vehicle occupant may refer to any arbitrary person or persons being positioned within the vehicle, such as a potential driver or passenger(s) of the vehicle, or a person being positioned in the vicinity thereof.

By the infotainment management system displaying, on a touch sensitive display associated with the infotainment system, one or several category user-interface objects associated with respective infotainment functionality categories, there is provided a display view visualizing a single or plurality of e.g. selectable infotainment related virtual buttons associated with a variety of infotainment functionality of the infotainment system. The referred to category objects, which may be referred to as e.g. tiles, refer to graphical, interactive, user-interface objects, with which the potential vehicle occupant may interact. Size and shape of a category object may be arbitrarily selected, and may vary. The respective category objects are adapted to, should one be selected, navigate a potential vehicle occupant to corresponding functionality and/or applications associated therewith. Each category object corresponds to an infotainment functionality category, which, should such a category object be selected, subsequently may initiate a display view comprising applications and/or functionality related to that infotainment functionality category. The functionality categories may relate to arbitrary infotainment functionality, which may be categorized as considered intuitive and/or as preferred.

The category objects may for instance be displayed in a virtual category section of the touch sensitive display, i.e. a virtual region of the touch sensitive display, comprising the category objects. The category section is merely intended to identify a display area region of the display in which the category objects may be displayed, and may for instance be defined by an aggregated display area constituting, or at least comprising, the one or several category objects. Accordingly, the location on the touch sensitive display, as well as the shape and/or size of the display area constituting the category section, may vary along with the shape(s) and/or size(s) of the category object(s). Alternatively, the shape and size of the category section may be predetermined, and/or chosen as suitable or preferred. The category section may be a continuous or discontinuous area. Furthermore, the category objects constituting the category section may vary over time, i.e. the category section may, for instance, at a first time instant, comprise a first, second and third category object, and at a second time instant comprise, for instance, the second and a fourth category object.

The referred to touch sensitive display, i.e. touch screen, which according to some embodiments may be represented by a touch sensitive display known in the art, is associated with the infotainment system in that infotainment related functionality may be output and/or input/controlled by means of said touch sensitive display. The touch sensitive display provides both an output interface and an input interface between the infotainment system and the vehicle occupant, thus providing a user interface through which the vehicle occupant may interact with the infotainment system. In general, visual output may include text, graphics, video, digital images, animations, user-interface objects and any combination thereof. Furthermore, the touch sensitive display comprises a touch-sensitive surface that may accept user input from the vehicle occupant based on e.g. tactile contact, and may detect contact and any movement or break thereof using any plurality of touch sensitive technologies, including but not limited to capacitive, resistive, infrared, and surface acoustic wave technology, as well as other proximity sensor arrays or other elements for determining one or more points of contact. The vehicle occupant may make contact with the touch sensitive display using any suitable object or appendage, such as e.g. a finger, stylus and so forth. The contact may include one or more taps on the touch screen, maintaining continuous contact with the touch sensitive display, movement of the point of contact while maintaining continuous contact, a breaking of the contact, or any combination thereof. In general, the touch sensitive display may detect the contact and respond to the detected contact by performing operations corresponding to the interaction with the interactive object. The touch sensitive display may use LCD (liquid crystal display) technology, or LPD (light emitting polymer display) technology, although other display technologies may be used in other embodiments. According to embodiments herein, the touch sensitive display may be represented by a center stack display.

By the infotainment management system furthermore displaying, on the touch sensitive display, while at least one of the above mentioned one or several category objects is displayed on the touch sensitive display, one or several linking user-interface objects linking to one or several user application programs hosted on the nomadic device, which user application programs are supported by the infotainment system, there is provided a display view visualizing not only the previously mentioned category object(s), but additionally linking objects associated with the nomadic device. Thereby, linking objects, such as for instance user application program icons, linking to supported user application programs installed on the nomadic device, which programs may be invoked by the linking objects, may be displayed on the touch sensitive display in parallel with, i.e. at the same time as, the previously mentioned category object(s). The linking objects refer to graphical, interactive, user-interface objects associated with user application programs hosted on the nomadic device, with which the potential vehicle occupant may interact. Size and shape of a linking object may be arbitrarily selected, and may vary. Each linking object may be adapted to correspond to at least one user application program, i.e. for instance an "app", which, should such a linking object be selected, subsequently may support execution of the corresponding user application program being invoked. That is, the nomadic device may include various user application programs, e.g. either integrated into an operating system of the nomadic device, and/or stored in a memory thereof and executable by a processor thereof. Thus, user application programs may be hosted and run on the nomadic device while the vehicle occupant may interact with one or several of the user application programs through the in-vehicle infotainment system. Examples of user application programs include, for instance, applications available for the iPhone™ that is commercially available from apple Computer, Cupertino, Calif., applications for phones running the Android™ operating system that is commercially available from Google, Inc., Mountain View, Calif., applications for BlackBerry devices, available from RIM, Ontario Canada, and/or applications available for Windows Mobile devices, available from Microsoft Corp., Redmond, Wash. Additionally, the user application programs may be considered supported by the infotainment system, in that there is consideration given to whether or not, due to e.g. safety reasons, a user application program hosted on the nomadic device should be available, or alternatively only partly available to the vehicle occupant, through the in-vehicle infotainment system. Such considerations, e.g. app certifications, are known in the art, for instance as defined through the MirrorLink device interoperability standard, which offers integration between a smartphone and a vehicle's infotainment system.

The linking objects may for instance be displayed in a virtual nomadic linking section, i.e. a virtual region of the touch sensitive display, comprising the linking objects. The nomadic linking section is merely intended to identify a display area region of the display in which the linking objects may be displayed, and may for instance be defined by an aggregated display area constituting, or at least comprising, the one or several linking objects. Accordingly, the location on the touch sensitive display, as well as the shape and/or size of the display area constituting the nomadic linking section, may vary along with the shape(s) and/or size(s) of the linking object(s). Alternatively, the shape and size of the nomadic linking section may be predetermined, and/or chosen as suitable or preferred. The nomadic linking section may be a continuous or discontinuous area. Furthermore, the linking objects constituting the nomadic linking section may vary over time, i.e. the nomadic linking section may, for instance, at a first time instant, comprise a first, second and third linking object, and at a second time instant comprise, for instance, the second and a fourth linking object.

According to an embodiment, the infotainment management system further determines selection detection of a selected linking object out of the linking objects, for invoking a selected user application program hosted on the nomadic device. Thereby, it is determined that a selection has been made of a chosen linking object, thus indicating that the corresponding user application program installed on the nomadic device may be invoked. Selection detection may for instance be determined based on voice input, touchpad input and/or input through physical keypads and/or buttons. According to a further embodiment, however, the infotainment management system determines selection detection of the selected linking object based on touch detection in a display area of the touch sensitive display associated with the selected linking object. Thereby, the selection detection is determined based on contact with a part of the touch sensitive display corresponding to a chosen linking object. The display area associated with the selected linking object may e.g. either overlap, or partly overlap, with the chosen linking object. Accordingly, the shape and/or size of the display area associated with a linking object may vary along with the shape and/or size of the corresponding linking object.

According to another embodiment, the infotainment management system may further assign currently available in-vehicle resource components associated with the infotainment system to the selected user application program running, or being about to run, on the nomadic device. Thereby, the nomadic device may to great extent be integrated with the in-vehicle infotainment system, in that there is provided support for enabling the selected user application program to utilize currently available resources components of the vehicle. The resource components may for instance comprise arbitrary resources suitable, and currently available for the infotainment system, and may refer to input/control devices such as physical push buttons, rocker buttons, dials, slider switches, sticks, and/or a touchpad, and additionally or alternatively physical output devices. It should be noted that if, for instance, infotainment functionality and/or applications other than the currently selected user application program is considered to have higher priority, the resource components may be assigned to said other functionality and/or applications. Higher priority may for instance be based on detection of selection of other infotainment functionality, for instance associated with selection of one of the one or several category objects associated with respective infotainment functionality categories, and/or based on safety aspects such as for instance warning, by means of for instance the speakers, the potential vehicle occupant of a hazardous condition.

According to a further embodiment, the resource components may comprise one or a combination of a microphone, physical infotainment buttons adapted for functionality control of the infotainment system, physical media player buttons adapted for control of media player functionality of the infotainment system, and/or speakers. The infotainment management system may then utilize the microphone, the infotainment buttons and/or the media player buttons for controlling the selected user application program running on the nomadic device; and/or utilize the speakers for providing audio output of the selected user application program running on the nomadic device. The physical infotainment buttons adapted for functionality control of the infotainment system may for instance refer to steering wheel control buttons, commonly known to control the infotainment system.

According to one embodiment, the infotainment management system may further display, on the touch sensitive display, visual output of the selected user application program running on the nomadic device, while at least one of the one or several category objects is displayed on the touch sensitive display. Thereby, content associated with such a selected user application program running on the nomadic device may be displayed on the touch sensitive display simultaneously with, i.e. in parallel with, the previously mentioned category object(s) being displayed, and the vehicle occupant may interact with the selected user application program through the in-vehicle infotainment system.

It should be noted that the visualization of the linking objects may be replaced by the visualization of the visual output of the user application program. Alternatively, the visual output of the user application program may be visualized in parallel with the nomadic linking objects, i.e. while the nomadic linking objects are still being displayed.

The visual output of the user application program may for instance be displayed in a virtual nomadic application section, i.e. a virtual region of the touch sensitive display, comprising the visual output of the selected user application program. The nomadic application section is merely intended to identify a display area region of the display in which content of the selected user application program may be displayed. Accordingly, the location on the touch sensitive display, as well as the shape and/or size of the display area constituting the nomadic application section, may vary along with the shape(s) and/or size(s) of the visual output of the selected user application program. Alternatively, the shape and size of the nomadic application section may be predetermined, and/or chosen as suitable or preferred. The nomadic application section may be a continuous or discontinuous area.

According to another embodiment, the infotainment management system may further, prior to the previously mentioned action of displaying the one or several linking objects, display, on the touch sensitive display, while at least one of the one or several category objects is displayed on the touch sensitive display, a nomadic category user-interface object associated with the nomadic device; and determine selection detection of the nomadic category object. Thereby, there is provided a display view visualizing a nomadic category object associated with the nomadic device, e.g. a selectable virtual button, whereby upon determination of selection detection of the nomadic category object, subsequently, display of the nomadic linking objects may be initiated. The nomadic category object, which may be referred to as e.g. a nomadic device tile, refers to a graphical, interactive, user-interface object, with which the potential vehicle occupant may interact. Location on the touch sensitive display, as well as the size and shape of the nomadic category object, may be arbitrarily selected, and may vary. The nomadic category object corresponds to functionality of the nomadic device, and selection of the nomadic category object may, as previously mentioned, subsequently initiate visualization of the nomadic linking objects. The determination of selection detection of the nomadic category object may, for instance, be based on touch detection in a display area of the touch sensitive display associated with the nomadic category object. Thereby, the selection detection is determined based on contact with a part of the touch sensitive display corresponding to the nomadic category object. The display area associated with the nomadic category object may e.g. either overlap, or partly overlap, with the nomadic category object. Accordingly, the location on the touch sensitive display, as well as the shape and/or size of the display area associated with a nomadic category object, may vary along with the shape and/or size of the corresponding nomadic category object. Alternatively, the selection detection may be based on voice input, touchpad input and/or input through physical keypads and/or buttons.

It should be noted that the visualization of the nomadic category object may be replaced by the visualization of the linking objects and/or the visual output of the user application program. Alternatively, the linking objects and/or the visual output of the user application program may be visualized in parallel with the nomadic category object, i.e. while the nomadic category object is still being displayed.

The nomadic category object may for instance be displayed in a nomadic category section, i.e. a virtual region of the touch sensitive display, comprising the nomadic category object. The nomadic category section is merely intended to identify a display area region of the display in which the nomadic category object may be displayed. Accordingly, the location on the touch sensitive display, as well as the shape and/or size of the display area constituting the nomadic category section may vary along with the shape and/or size of the nomadic category object. Alternatively, the shape and size of the nomadic category section may be predetermined, and/or chosen as suitable or preferred. The nomadic category section may be a continuous or discontinuous area.

According to yet another embodiment, the infotainment management system further displays a portion of visual output associated with the selected user application program running on the nomadic device, on an additional display of the vehicle positioned in front of a potential driver of the vehicle. Thereby, content considered to be of importance and/or for other reasons considered suitable, may be presented to the driver in a manner which is likely to grab his or her attention. That is, since the additional display is positioned in front of the driver, for instance in the instrument panel, the additional display may be in plain view of the driver when he or she is facing forward. Accordingly, the driver may be prompted with visual output while, to great extent, keeping his or her eyes on the road. The additional display may be represented by any suitable commonly known display, e.g. a display commonly utilized for presenting driving related information, such as a display of a driving information module. Alternatively, the additional display need not necessarily be a digital display, but may even be represented by any suitable surface functioning as a display for projection, e.g. a windscreen, or a head-up display. "In front of" is here intended to be interpreted to likewise include "essentially in front of" and "close to in front of". Furthermore, the referred to portion of visual output may for instance include graphic, video, digital images, animations and/or text, for instance visualized as a pop-up message. Additionally, display of the portion of visual output may for instance be initiated by the selected user application program pushing a message which is considered allowed to be displayed on the additional display.

According to still another embodiment, the nomadic category object and/or a category object of the one or several category objects may be represented by a respective specific virtual button. Furthermore, a linking object of the one or several linking objects may be represented by a specific user application program icon. Thereby, feasible solutions of implementation are suggested.

According to one embodiment, the infotainment functionality categories may relate to applications associated with navigation, music, and/or telephony. Thereby, e.g. a navigation tile, a music tile, such as an iPod tile, and a phone tile may represent functionality options of the infotainment system, which upon respective selection, may provide support to navigate the potential vehicle occupant to corresponding functionality and/or applications associated therewith.

According to a second aspect of embodiments herein, the object is achieved by an infotainment management system for managing infotainment functionality of an infotainment system of a vehicle to which a nomadic device is connectable. The infotainment management system comprises a displaying unit adapted for displaying, on a touch sensitive display associated with the infotainment system, one or several category user-interface objects associated with respective infotainment functionality categories. The displaying unit is further adapted for displaying, on the touch sensitive display, while at least one of the one or several category objects is displayed on the touch sensitive display, one or several linking user-interface objects linking to user application programs hosted on the nomadic device, which user application programs are supported by the infotainment system. Similar advantages as those mentioned in the foregoing correspondingly apply, why these are not further discussed. The displaying unit may for instance be represented by one or more modules including instructions to perform the actions discussed above. Furthermore, the displaying unit may for instance be comprised in one or several suitable electronic devices, such as for instance an integrated arbitrary electronic control unit (ECU) node, e.g. a display controller node, an infotainment node or main central node, or a graphical controller.

According to one embodiment, the infotainment management system may, as previously mentioned, further comprise the touch sensitive display described in the foregoing. Similar advantages as those mentioned in the foregoing hence correspondingly apply, why these are not further discussed.

According to another embodiment, the infotainment management system may further comprise a connecting unit adapted for enabling connection of the nomadic device to the infotainment system. The connecting unit enables connection via one or a combination of wireless connections such as Bluetooth, Wi-Fi, and/or infrared serial connections, and physical connections such as via USB (Universal Serial Bus), HDMI/VGA (High-Definition Multimedia Interface / Video Graphics Array), auxiliary sockets, and/or customized sockets. The connecting unit may hence support wireless communication and/or communication over a physical interface and may, similar to the previously discussed displaying unit, for instance be represented by one or more modules e.g. comprised in one or several suitable electronic devices, such as for instance an integrated arbitrary electronic control unit (ECU) node, e.g. a display controller node, an infotainment node or main central node, or a graphical controller.

According to a third aspect of embodiments herein, the object is achieved by a vehicle comprising the infotainment management system described above. The vehicle comprises an infotainment system to which the nomadic device is connectable and with which the touch sensitive display is associated, which touch sensitive display is comprised in a center stack, instrument panel, cluster and/or dashboard of the vehicle. Yet again, similar advantages as those mentioned in the foregoing correspondingly apply, why these are not further discussed.

According to one embodiment, the vehicle may further comprise in-vehicle resource components associated with the infotainment system, which resource components comprise one or a combination of a microphone, physical infotainment buttons adapted for functionality control of the infotainment system, physical media player buttons adapted for control of media player functionality of the infotainment system, and/or speakers. The microphone, the infotainment buttons and/or the media player buttons are adapted for being utilized for controlling a selected user application program running on the nomadic device; and/or the speakers are adapted for being utilized for providing audio output of the selected user application program running on the nomadic device. Yet again, similar advantages as those mentioned in the foregoing correspondingly apply, why these are not further discussed.

It should be appreciated that while any or all of the nomadic category object, nomadic linking objects and/or visual output of the user application program is displayed, either or all of these said objects and/or said visual output may be abandoned should, for instance, any of the category objects instead be selected, e.g. by touch thereof on the touch sensitive display. Accordingly, e.g. functionality and/or applications associated with the selected category object may take precedence over the previous e.g. nomadic category object, nomadic linking object and/or selected user application program. Thus, either or all of the nomadic category object, nomadic linking objects and/or visual output of the user application program may, for instance, no longer be displayed, hence indicating, e.g. to the potential vehicle occupant, that the infotainment system is utilized for other infotainment related functionality. For instance, resource components of the infotainment system may instead be assigned to the newly selected category object, and/or subsequently to functionality or applications associated therewith, e.g. invoked by selection of said category object.

Additionally, it should be noted that the visualization of the category object(s), the nomadic category object, the nomadic linking object(s) and/or the visual output of the user application program, alternatively to being displayed in portrait view, may be displayed in landscape view.

It should furthermore be appreciated that the touch sensitive display additionally may display additional user-interface objects, non-related to infotainment functionality.

Furthermore, it should be understood that the introduced method for managing infotainment functionality of an infotainment system of a vehicle to which a nomadic device is connected, requires the touch sensitive display to be in an "ON" state.

### BRIEF DESCRIPTION OF THE DRAWINGS

The various aspects of the non-limiting embodiments of the invention, including particular features and advantages, will be readily understood from the following detailed description and the accompanying drawings, in which:
Figure 1 schematically illustrates an exemplifying vehicle comprising an infotainment management system for managing infotainment functionality of an infotainment system of the vehicle to which a nomadic device is connected, according to embodiments of the disclosure;
Figure 2 is a schematic block diagram illustrating an infotainment management system, according to embodiments of the disclosure;
Figure 3 shows an exemplifying view of a nomadic device display comprising user application programs hosted on the nomadic device;
Figures 4a-c show exemplifying views of a touch sensitive display associated with an infotainment system of a vehicle, according to embodiments of the disclosure; and
Figure 5 is a flowchart depicting an exemplifying method performed by an infotainment management system for managing infotainment functionality of an infotainment system of a vehicle to which a nomadic device is connected, according to embodiments of the disclosure.

### DETAILED DESCRIPTION

The non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to an infotainment management system for managing infotainment functionality of an infotainment system of a vehicle to which a nomadic device is connected / connectable, there will be disclosed how functionality related to the nomadic device may be provided on a touch sensitive display associated with the infotainment system, simultaneously with other available infotainment functionality options being displayed.

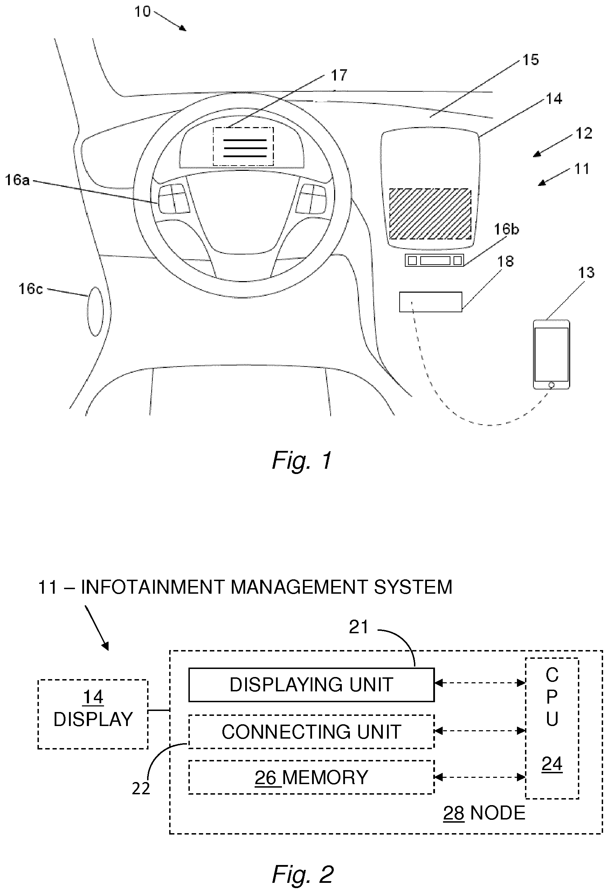

Referring now to the figures and **Figure 1** in particular, there is depicted an exemplifying **vehicle 10** comprising an **infotainment management system 11** for managing infotainment functionality of an **infotainment system 12** of the vehicle 10 to which a **nomadic device 13** is connected, according to embodiments of the disclosure. In the illustrated embodiment, the nomadic device 13 is a smart phone. Furthermore, the vehicle 10, which in Figure 1 is represented by a passenger car, comprises the infotainment system 12, to which the nomadic device 13 is connectable and with which a **touch sensitive display 14** is associated. The touch sensitive display 14 is here a center stack display comprised in a **center stack 15** of the vehicle 10; alternatively the touch sensitive display 14 may be comprised in an instrument panel, cluster and/or dashboard of the vehicle 10. Additionally, according to embodiments of the disclosure, the touch sensitive display 14 may furthermore be comprised in the infotainment management system 11.

In the illustrated embodiment, the vehicle 10 additionally comprises in-vehicle **resource components 16a, 16b, 16c** associated with the infotainment system 12. In Figure 1, the resource components 16a, 16b, 16c comprise a combination of physical **infotainment buttons 16a** adapted for functionality control of the infotainment system 12, physical **media player buttons 16b** adapted for control of media player functionality of the infotainment system 12, and **speakers 16c.** According to alternative embodiments, the resource components 16a, 16b, 16c may additionally or alternatively comprise one or several microphones.

Furthermore, in the illustrated embodiment, the vehicle 10 additionally comprises an optional **additional display 17** positioned in front of a potential driver (not shown) of the vehicle 10. The additional display 17 is in Figure 1 represented by a driver information module.

According to embodiments of the disclosure, there may be provided **physical connections 18** for connection of the nomadic device 13 to the infotainment system 12. In Figure 1, the physical connection 18 comprises a USB socket as well as a customized socket adapted for connection of the nomadic device 13.

As further shown in **Figure 2****,** which depicts a schematic block diagram illustrating an infotainment management system 11 according to embodiments of the disclosure, the infotainment management system 11 comprises a **displaying unit 21** and, optionally, a **connecting unit 22.** Furthermore, the embodiments herein for managing infotainment functionality of an infotainment system 12 of a vehicle 10 to which a nomadic device 13 is connected / connectable may be implemented through one or more processors, such as a **processor 24,** here denoted CPU (Central Processing Unit), together with computer program code for performing the functions and actions of the embodiments herein. Said program code may also be provided as a computer program product, for instance in the form of a data carrier carrying computer program code for performing the embodiments herein when being loaded into infotainment management system 11. One such carrier may be in the form of a CD ROM disc. It is however feasible with other data carriers such as a memory stick. The computer program code may furthermore be provided as pure program code on a server and downloaded to the infotainment management system 11, for instance in an assembly plant, workshop or at a facility of the supplier. The infotainment management system 11 may further comprise a **memory 26** comprising one or more memory units. The memory 26 may be arranged to be used to store e.g. information, and further to store data, configurations, schedulings, road maps and applications and so forth, to perform the methods herein when being executed in the infotainment management system 11. The processor 24, the memory 26, the displaying unit 21 and the connecting unit 22 may for instance be implemented in one or several arbitrary **nodes 28**, arranged locally on-board the vehicle, remotely, or a combination thereof. Said node 28 may be an electronic control unit (ECU) or any suitable generic electronic device, and may involve one or a combination of for instance a display controller node, an infotainment node, a main central node and/or a graphical controller. Those skilled in the art will also appreciate that the displaying unit 21 and/or the connecting unit 22 described above may refer to a combination of analog and digital circuits, and/or one or more processors configured with software and/or firmware, e.g. stored in a memory such as the memory 26, that when executed by the one or more processors such as the processor 24 perform as will be described in more detail later on in this description. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

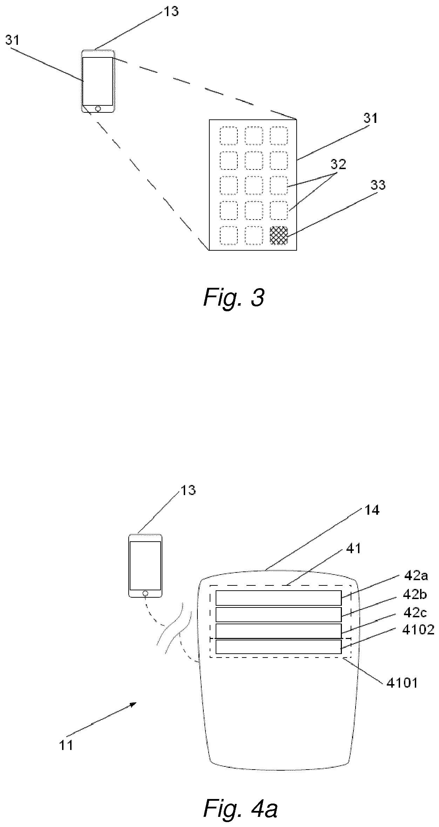

**Figure 3** shows an exemplifying view of a **nomadic device display 31** comprising **user application programs 32** hosted on the nomadic device 13. A **selected user application program** is denoted 33.

Furthermore, **Figures 4a-c** shows exemplifying views of a touch sensitive display 14 associated with an infotainment system 12 of a vehicle 10, according to embodiments of the disclosure. Figures 4a-c visualize, on the touch sensitive display 14, in an optional **category section 41** of the touch display 14, several graphical, interactive **category user-interface objects 42a, 42b, 42c** associated with respective functionality categories. In figures 4a-c, the category objects 42a, 42b, 42c are represented by virtual buttons. According to embodiments herein, the functionality categories may relate to, for instance, applications associated with navigation, music, and/or telephony. Accordingly, in Figures 4a-c, the top category object 42a, here a navigation tile, relates to applications associated with navigation, the second category object 42b, here a music tile, relates to applications associated with music, and the third category object 42c, here a phone tile, relates to applications associated with telephony.

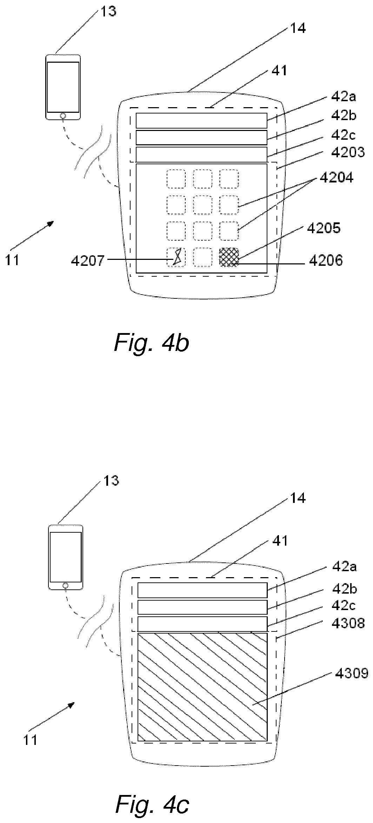

**Figure 4a** additionally visualizes, on the touch sensitive display 14, in an optional **nomadic category section 4101** of the touch sensitive display 14, while at the same time visualizing the category objects 42a, 42b, 42c, a graphical, interactive **nomadic category user-interface object 4102** associated with the nomadic device 13. The nomadic category object 4102 of Figure 4a is represented by a virtual button, which upon selection, for instance may initiate the display view shown in Figure 4b.

**Figure 4b** visualizes, on the touch sensitive display 14, in an optional **nomadic linking section 4203** of the touch sensitive display 14, while at the same time visualizing the category objects 42a, 42b, 42c, several graphical, interactive **linking user-interface objects 4204** linking to one or several user application programs hosted on the nomadic device 13, which user application programs are supported by the infotainment system 12. Figure 4b furthermore visualizes a graphical, interactive **selected linking user-interface object 4205** out of the linking objects 4204, which linking object is adapted to, if selected, enable for the selected user application program 33, see Figure 3, hosted on the nomadic device 13 to be invoked. Additionally visualized is a **display area 4206** of the touch sensitive display 14 associated with the selected linking object 4205.

As mentioned in the foregoing, according to embodiments herein, the nomadic category object 4102 and/or a category object of the one or several category objects 42a, 42b, 42c may be represented by a respective specific virtual button. Additionally and/or alternatively, a linking object of the one or several linking objects 4204 may, as illustrated in Figure 4b, be represented by a specific user application program **icon 4207.**

**Figure 4c** visualizes, on the touch sensitive display 14, in an optional **nomadic application section 4308** of the touch sensitive display 14, while at the same time visualizing the category section 41 comprising the category objects 42a, 42b, 42c, **visual output 4309** of the selected user application program 33 running on the nomadic device 13.

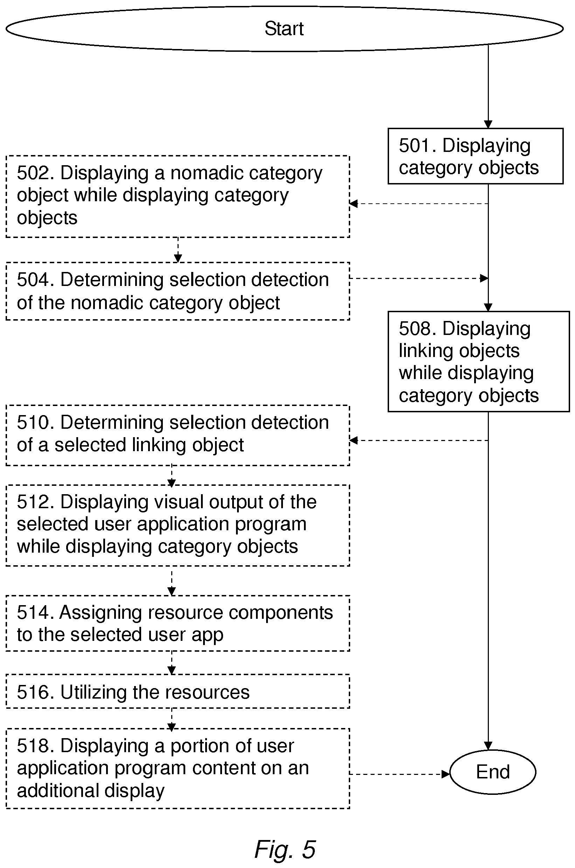

**Figure 5** is a flowchart depicting an exemplifying method performed by an infotainment management system 11 for managing infotainment functionality of an infotainment system 12 of a vehicle 10 to which a nomadic device 13 is connectable, according to embodiments of the disclosure. The exemplifying method, which may be continuously repeated, comprises the following actions discussed with support from Figures 1-4. The actions may be performed in any suitable order and, where suitable, in parallel.

Preceding the following actions, the nomadic device 13 has been connected to the infotainment system 12. The connection may, according to embodiments of the disclosure, have been accomplished by means of the connecting unit 22, which may enable connection via one or a combination of wireless connections such as Bluetooth, Wi-Fi, and/or infrared serial connections, and physical connections 18 such as via USB (Universal Serial Bus), HDMI/VGA (High-Definition Multimedia Interface / Video Graphics Array), auxiliary sockets, and/or customized sockets.

### Action 501

In Action 501, the infotainment management system 11 displays, by means of the displaying unit 21, on the touch sensitive display 14 associated with the infotainment system 12, the one or several category user-interface objects 42a, 42b, 42c, see Figure 4a, associated with respective infotainment functionality categories.

### Action 502

In optional Action 502, the infotainment management system 11 may display, for instance by means of the displaying unit 21, on the touch sensitive display 14, while at least one of the one or several category objects 42a, 42b, 42c, see Figure 2a, is displayed, the nomadic category user-interface object 4102 associated with the nomadic device 13.

### Action 504

In optional Action 504, the infotainment management system 11 may determine selection detection of the nomadic category object 4102, see Figure 4a.

### Action 508

In Action 508, the infotainment management system 11 displays, by means of the displaying unit 21, on the touch sensitive display 14, while at least one of the one or several category objects 42a, 42b, 42c is displayed, the one or several linking user-interface objects 4204, see Figure 4b, linking to one or several user application programs hosted on the nomadic device 13, which user application programs are supported by the infotainment system 12.

### Action 510

In optional Action 510, the infotainment management system 11 may determine selection detection of the selected linking object 4205, see Figure 4b, out of the linking objects 4204 for invoking a selected user application program 33, see Figure 3, hosted on the nomadic device 13.

According to embodiments herein, in the step of determining selection detection, i.e. optional Action 510, said determination of selection detection of the selected linking object 4205, may be based on touch detection in the display area 4206 of the touch sensitive display 14 associated with the selected linking object 4205.

### Action 512

In optional Action 512, the infotainment management system 11 may display, on the touch sensitive display 14, the visual output 4309, see Figure 4c, of the selected user application program 33, see Figure 3, running on the nomadic device 13, while at least one of the one or several category objects 42a, 42b, 42c is displayed.

### Action 514

In optional Action 514, the infotainment management system 11 may assign the currently available in-vehicle resource components 16a, 16b, 16c, see Figure 1, associated with the infotainment system 12 to the selected user application program 33.

### Action 516

As previously mentioned, the resource components 16a, 16b, 16c, see Figure 1, may comprise one or a combination of a microphone, the physical infotainment buttons 16a adapted for functionality control of the infotainment system 12, the physical media player buttons 16b adapted for control of media player functionality of the infotainment system 12, and/or speakers 16c.

Accordingly, in optional Action 516, the infotainment management system 11 may utilize the microphone, the infotainment buttons 16a and/or the media player buttons 16b for controlling the selected user application program 33 running on the nomadic device 13; and/or utilize the speakers 16c for providing audio output of the selected user application program 33 running on the nomadic device 13.

### Action 518

In optional Action 518, the infotainment management system 11 may display a portion of visual output associated with the selected user application program 33 running on the nomadic device 13, on the additional display 17, see Figure 1, positioned in front of the potential driver of the vehicle 10.

Consequently, the provision of the infotainment management system 11 for managing infotainment functionality of the infotainment system 12 of the vehicle 10 to which the nomadic device 13 is connected, accordingly provides a potential vehicle occupant with a high quality experience, while fewer user-interaction actions may be required to reach preferred infotainment options.

## Claims

1. A method performed by an infotainment management system (11) for managing infotainment functionality of an infotainment system (12) of a vehicle (10) to which a nomadic device (13) is connected, said method comprising:
*displaying* (501), on a touch sensitive display (14) associated with said infotainment system (12), one or several category user-interface objects (42a, 42b, 42c) associated with respective infotainment functionality categories;
**characterized in that** the method further comprises:
*displaying* (508), on said touch sensitive display (14), one or several linking user-interface objects (4204) simultaneously with at least one of said one or several category user-interface objects (42a, 42b, 42c), wherein the one or several linking user-interface objects (4204) are linking to one or several user application programs (32, 33) hosted on said nomadic device (13), wherein the user application programs are supported by said infotainment system (12);
*determining* (510) selection detection of a selected linking object (4205) out of said linking objects (4204) for invoking a selected user application program (33) hosted on said nomadic device (13); and
*displaying* (518) a portion of visual output associated with said selected user application program (33) running on said nomadic device (13), on an additional display (17) of said vehicle (10) positioned in front of a driver of said vehicle (10).

2. The method in accordance with claim 1, wherein said *determining* (510) selection detection of the selected linking object (4205) is based on touch detection in a display area (4206) of said touch sensitive display (14) associated with said selected linking object (4205).

3. The method in accordance with claim 1 or 2, further comprising:
*assigning* (514) currently available in-vehicle resource components (16a, 16b, 16c) associated with said infotainment system (12) to said selected user application program (33) running, or about to run, on said nomadic device (13).

4. The method in accordance with claim 3, wherein said resource components (16a, 16b, 16c) comprise one or a combination of a microphone, physical infotainment buttons (16a) adapted for functionality control of said infotainment system (12), physical media player buttons (16b) adapted for control of media player functionality of said infotainment system (12), and/or speakers (16c), said method further comprising:
*utilizing* (516) said microphone, said infotainment buttons (16a) and/or said media player buttons (16b) for controlling said selected user application program (33); and/or
*utilizing* (516) said speakers (16c) for providing audio output of said selected user application program (33).

5. The method in accordance with any one of claims 1 to 4, further comprising:
*displaying* (512), on said touch sensitive display (14), visual output (4309) of said selected user application program (33) running on said nomadic device (13), while at least one of said one or several category user-interface objects (42a, 42b, 42c) is displayed.

6. The method in accordance with any one of the preceding claims, said method further comprising, prior to said *displaying* (508) the one or several linking objects (4204):
*displaying* (502), on said touch sensitive display (14), while at least one of said one or several category user-interface objects (42a, 42b, 42c) is displayed, a nomadic category user-interface object (4102) associated with said nomadic device (13); and
*determining* (504) selection detection of said nomadic category object (4102).

7. The method in accordance with any one of the preceding claims, wherein said nomadic category object and/or a category object of said one or several category user-interface objects (42a, 42b, 42c) is represented by a respective specific virtual button, and/or a linking object (4207) of said one or several linking objects (4204) is represented by a specific user application program icon.

8. The method in accordance with any one of the preceding claims, wherein said infotainment functionality categories relates to applications associated with navigation, music, and/or telephony.

9. An **infotainment management system** (11) for managing infotainment functionality of an infotainment system (12) of a vehicle (10) to which a nomadic device (13) is connectable, said infotainment management system (11) comprising:
a **displaying unit** (21) adapted for *displaying* (501), on a touch sensitive display (14) associated with said infotainment system (12), one or several category user-interface objects (42a, 42b, 42c) associated with respective infotainment functionality categories;
**characterized in that**
said displaying unit (21) is adapted for *displaying* (508), on said touch sensitive display (14), one or several linking user-interface objects (4204) simultaneously with at least one of said one or several category user-interface objects (42a, 42b, 42c), wherein the one or several linking user-interface objects (4204) are linking to one or several user application programs (32, 33) hosted on said nomadic device (13), wherein the user application programs are supported by said infotainment system (12),
the infotainment management system (11) is adapted to:
determine (510) selection detection of a selected linking object (4205) out of said linking objects (4204) for invoking a selected user application program (33) hosted on said nomadic device (13); and to
display (518) a portion of visual output associated with said selected user application program (33) running on said nomadic device (13), on an additional display (17) of said vehicle (10) positioned in front of a driver of said vehicle (10).

10. The infotainment management system (11) in accordance with claim 9, further comprising said **touch sensitive display** (14).

11. The infotainment management system (11) in accordance with claim 9 or 10, further comprising:
a **connecting unit** (22) adapted for enabling connection of said nomadic device (13) to said infotainment system (12), said connecting unit (22) enabling connection via one or a combination of wireless connections such as Bluetooth, Wi-Fi, and/or infrared serial connections, and physical connections (18) such as via USB (Universal Serial Bus), HDMI/VGA (High-Definition Multimedia Interface / Video Graphics Array), auxiliary sockets, and/or customized sockets.

12. A **vehicle** (10) comprising the infotainment management system (11) in accordance with any one of claims 9 to 11, said vehicle (10) further comprising:
an **infotainment system** (12) to which said nomadic device (13) is connectable and with which said touch sensitive display (14) is associated, said touch sensitive display (14) being comprised in a center stack (15), instrument panel, cluster and/or dashboard of said vehicle (10).

13. The vehicle (10) in accordance with claim 12, said vehicle (10) further comprising:
in-vehicle **resource components** (16a, 16b, 16c) associated with said infotainment system (12), said resource components (16a, 16b, 16c) comprising one or a combination of a microphone, physical infotainment buttons (16a) adapted for functionality control of said infotainment system (12), physical media player buttons (16b) adapted for control of media player functionality of said infotainment system (12), and/or speakers (16c),
wherein said microphone, said infotainment buttons (16a) and/or said media player buttons (16b) are adapted for being *utilized* (516) for controlling a selected user application program (33) hosted on said nomadic device (13); and/or
wherein said speakers (16c) are adapted for being *utilized* (516) for providing audio output of said selected user application program (33) hosted on said nomadic device (13).

## Patentansprüche

1. Verfahren, das durch ein Infotainment-Managementsystem (11) zum Managen einer Infotainment-Funktionalität eines Infotainment-Systems (12) eines Fahrzeugs (10), mit dem eine Nomadenvorrichtung (13) verbunden ist, ausgeführt wird, wobei das Verfahren Folgendes umfasst:
Anzeigen (501) auf einer berührungsempfindlichen Anzeige (14), die dem Infotainment-System (12) zugeordnet ist, eines oder einiger Kategorieanwenderschnittstellenobjekte (42a, 42b, 42c), die den jeweiligen Infotainment-Funktionalitätskategorien zugeordnet sind;
**dadurch gekennzeichnet, dass** das Verfahren ferner Folgendes umfasst:
Anzeigen (508) auf der berührungsempfindlichen Anzeige (14) eines oder einiger Verlinkungsanwenderschnittstellenobjekte (4204) gleichzeitig mit mindestens einem des einen oder der einigen Kategorieanwenderschnittstellenobjekte (42a, 42b, 42c), wobei das eine oder die einigen Verlinkungsanwenderschnittstellenobjekte (4204) mit einem oder einigen Anwenderanwendungsprogrammen (32, 33), die auf der Nomadenvorrichtung (13) gehostet werden, verlinken, wobei die Anwenderanwendungsprogramme durch das Infotainment-System (12) unterstützt werden;
Bestimmen (510) einer Auswahldetektion eines ausgewählten Verlinkungsobjekts (4205) aus den Verlinkungsobjekten (4204) zum Aufrufen eines ausgewählten Anwenderanwendungsprogramms (33), das auf der Nomadenvorrichtung (13) gehostet wird; und
Anzeigen (518) eines Teils einer visuellen Ausgabe, die dem ausgewählten Anwenderanwendungsprogramm (33), das auf der Nomadenvorrichtung (13) läuft, zugeordnet ist, auf einer zusätzlichen Anzeige (17) des Fahrzeugs (10), die vor einem Fahrer des Fahrzeugs (10) positioniert ist.

2. Verfahren in Übereinstimmung mit Anspruch 1, wobei das Bestimmen (510) der Auswahldetektion des ausgewählten Verlinkungsobjekts (4205) auf einer Berührungsdetektion in einem Anzeigebereich (4206) der berührungsempfindlichen Anzeige (14), die dem ausgewählten Verlinkungsobjekt (4205) zugeordnet ist, beruht.

3. Verfahren in Übereinstimmung mit Anspruch 1 oder 2, das ferner Folgendes umfasst:
Zuweisen (514) von derzeit verfügbaren fahrzeuginternen Betriebsmittelkomponenten (16a, 16b, 16c), die dem Infotainment-System (12) zugeordnet sind, zu dem ausgewählten Anwenderanwendungsprogramm (33), das auf der Nomadenvorrichtung (13) läuft oder im Begriff ist, zu laufen.

4. Verfahren in Übereinstimmung mit Anspruch 3, wobei die Betriebsmittelkomponenten (16a, 16b, 16c) eines oder eine Kombination von einem Mikrofon, physikalischen Infotainment-Knöpfen (16a), die für eine Funktionalitätssteuerung des Infotainment-Systems (12) ausgelegt sind, physikalischen Mediaplayer-Knöpfen (16b), die für eine Steuerung einer Mediaplayer-Funktionalität des Infotainment-Systems (12) ausgelegt sind, und/oder Lautsprechern (16c) umfassen, wobei das Verfahren ferner Folgendes umfasst:
Verwenden (516) des Mikrofons, der Infotainment-Knöpfe (16a) und/oder der Medienplayer-Knöpfe (16b) zum Steuern des ausgewählten Anwenderanwendungsprogramms (33); und/oder
Verwenden (516) der Lautsprecher (16c) zum Bereitstellen einer Audioausgabe des ausgewählten Anwenderanwendungsprogramms (33).

5. Verfahren in Übereinstimmung mit einem der Ansprüche 1 bis 4, das ferner Folgendes umfasst:
Anzeigen (512) auf der berührungsempfindlichen Anzeige (14) einer visuellen Ausgabe (4309) des ausgewählten Anwenderanwendungsprogramms (33), das auf der Nomadenvorrichtung (13) läuft, während mindestens eines des einen oder der einigen Kategorieanwenderschnittstellenobjekte (42a, 42b, 42c) angezeigt wird.

6. Verfahren in Übereinstimmung mit einem der vorhergehenden Ansprüche, wobei das Verfahren ferner vor dem Anzeigen (508) des einen oder einiger Verlinkungsobjekte (4204) Folgendes umfasst:
Anzeigen (502) auf der berührungsempfindlichen Anzeige (14), während mindestens eines des einen oder der einigen Kategorieanwenderschnittstellenobjekte (42a, 42b, 42c) angezeigt wird, eines Nomadenkategorieanwenderschnittstellenobjekts (4102), das der Nomadenvorrichtung (13) zugeordnet ist; und
Bestimmen (504) einer Auswahldetektion des Nomadenkategorieobjekts (4102).

7. Verfahren in Übereinstimmung mit einem der vorhergehenden Ansprüche, wobei das Nomadenkategorieobjekt und/oder ein Kategorieobjekt des einen oder der einigen Kategorieanwenderschnittstellenobjekte (42a, 42b, 42c) durch einen jeweiligen spezifischen virtuellen Knopf repräsentiert wird und/oder ein Verlinkungsobjekt (4207) des einen oder der einigen Verlinkungsobjekte (4204) durch ein spezifisches Anwenderanwendungsprogrammsymbol repräsentiert wird.

8. Verfahren in Übereinstimmung mit einem der vorhergehenden Ansprüche, wobei sich die Infotainment-Funktionalitätskategorien auf Anwendungen beziehen, die Navigation, Musik und/oder Telefonie zugeordnet sind.

9. Infotainment-Managementsystem (11) zum Managen einer Infotainment-Funktionalität eines Infotainment-Systems (12) eines Fahrzeugs (10), mit dem eine Nomadenvorrichtung (13) verbunden werden kann, wobei das Infotainment-Managementsystem (11) Folgendes umfasst:
eine Anzeigeeinheit (21), die ausgelegt ist, auf einer berührungsempfindlichen Anzeige (14), die dem Infotainment-System (12) zugeordnet ist, ein oder einige Kategorieanwenderschnittstellenobjekte (42a, 42b, 42c), die jeweilige Infotainment-Funktionalitätskategorien zugeordnet sind, anzuzeigen (501) ;
**dadurch gekennzeichnet, dass**
die Anzeigeeinheit (21) ausgelegt ist, auf der berührungsempfindlichen Anzeige (14) ein oder einige Verlinkungsanwenderschnittstellenobjekte (4204) gleichzeitig mit mindestens einem des einen oder der einigen Kategorieanwenderschnittstellenobjekte (42a, 42b, 42c) anzuzeigen (508), wobei das eine oder die einigen Verlinkungsanwenderschnittstellenobjekte (4204) mit einer oder einigen Anwenderanwendungsprogrammen (32, 33) verlinken, die auf der Nomadenvorrichtung (13) gehostet werden, wobei die Anwenderanwendungsprogramme durch das Infotainment-System (12) unterstützt werden,
wobei das Infotainment-Managementsystem (11) ausgelegt ist zum:
Bestimmen (510) einer Auswahldetektion eines ausgewählten Verlinkungsobjekts (4205) aus den Verlinkungsobjekten (4204) zum Aufrufen eines ausgewählten Anwenderanwendungsprogramms (33), das auf der Nomadenvorrichtung (13) gehostet wird; und
Anzeigen (518) eines Teils einer visuellen Ausgabe, die dem ausgewählten Anwenderanwendungsprogramm (33) zugeordnet ist, das auf der Nomadenvorrichtung (13) läuft, auf einer zusätzlichen Anzeige (17) des Fahrzeugs (10), die vor einem Fahrer des Fahrzeugs (10) positioniert ist.

10. Infotainment-Managementsystem (11) in Übereinstimmung mit Anspruch 9, das ferner die berührungsempfindliche Anzeige (14) umfasst.

11. Infotainment-Managementsystem (11) in Übereinstimmung mit Anspruch 9 oder 10, das ferner Folgendes umfasst:
eine Verbindungseinheit (22), die ausgelegt ist, eine Verbindung der Nomadenvorrichtung (13) mit dem Infotainment-System (12) zu ermöglichen, wobei die Verbindungseinheit (22) eine Verbindung über eines oder eine Kombination von drahtlosen Verbindungen wie etwa Bluetooth, Wi-Fi und/oder seriellen Infrarotverbindungen und physikalischen Verbindungen (18), wie etwa über USB (universeller serieller Bus), HDMI/VGA (High-Definition Multimedia Interface/Video Graphics Array), Hilfsbuchsen und/oder kundenspezifischen Buchsen ermöglicht.

12. Fahrzeug (10), das das Infotainment-Managementsystem (11) in Übereinstimmung mit einem der Ansprüche 9 bis 11 umfasst, wobei das Fahrzeug (10) ferner Folgendes umfasst:
ein Infotainment-System (12), mit dem die Nomadenvorrichtung (13) verbunden werden kann und dem die berührungsempfindliche Anzeige (14) zugeordnet ist, wobei die berührungsempfindliche Anzeige (14) in einer Mittelkonsole (15), einer Instrumententafel, einer Gruppe und/oder einem Armaturenbrett des Fahrzeugs (10) enthalten ist.

13. Fahrzeug (10) in Übereinstimmung mit Anspruch 12, wobei das Fahrzeug (10) ferner Folgendes umfasst:
fahrzeuginterne Betriebsmittelkomponenten (16a, 16b, 16c), die dem Infotainment-System (12) zugeordnet sind, wobei die Betriebsmittelkomponenten (16a, 16b, 16c) eines oder eine Kombination von einem Mikrofon, physikalischen Infotainment-Knöpfen (16a), die für eine Funktionalitätssteuerung des Infotainment-Systems (12) ausgelegt sind, physikalischen Mediaplayer-Knöpfen (16b), die für eine Steuerung einer Mediaplayer-Funktionalität des Infotainment-Systems (12) ausgelegt sind, und/oder Lautsprechern (16c) umfasst,
wobei das Mikrofon, die Infotainment-Knöpfe (16a) und/oder die Medienplayer-Knöpfe (16b) ausgelegt sind, zum Steuern eines ausgewählten Anwenderanwendungsprogramms (33), das auf der Nomadenvorrichtung (13) gehostet wird, verwendet (516) zu werden; und/oder
wobei die Lautsprecher (16c) ausgelegt sind, zum Bereitstellen einer Audioausgabe des ausgewählten Anwenderanwendungsprogramms (33), das auf der Nomadenvorrichtung (13) gehostet wird, verwendet (516) zu werden.

## Revendications

1. Procédé réalisé par un système de gestion d'info-loisirs (11) pour gérer une fonctionnalité d'info-loisirs d'un système d'info-loisirs (12) d'un véhicule (10) auquel est connecté un dispositif nomade (13), ledit procédé comprenant :
l'affichage (501), sur un afficheur tactile (14) associé audit système d'info-loisirs (12), d'un ou plusieurs objets d'interface utilisateur de catégories (42a, 42b, 42c) associés à des catégories de fonctionnalités d'info-loisirs respectives ;
**caractérisé en ce que** le procédé comprend en outre : l'affichage (508), sur ledit afficheur tactile (14), d'un ou plusieurs objets d'interface utilisateur de liaison (4204) simultanément à au moins un desdits un ou plusieurs objets d'interface utilisateur de catégories (42a, 42b, 42c), les un ou plusieurs objets d'interface utilisateur de liaison (4204) se reliant à un ou plusieurs programmes d'application utilisateur (32, 33) hébergés sur ledit dispositif nomade (13), les programmes d'application utilisateur étant pris en charge par ledit système d'info-loisirs (12) ;
la détermination (510) d'une détection de sélection d'un objet de liaison sélectionné (4205) parmi lesdits objets de liaison (4204) pour appeler un programme d'application utilisateur sélectionné (33) hébergé sur ledit dispositif nomade (13) ; et
l'affichage (518) d'une partie d'un contenu visuel associé audit programme d'application utilisateur sélectionné (33) exécuté sur ledit dispositif nomade (13), sur un afficheur supplémentaire (17) dudit véhicule (10) placé devant un conducteur dudit véhicule (10) .

2. Procédé selon la revendication 1, dans lequel ladite détermination (510) d'une détection de sélection de l'objet de liaison sélectionné (4205) est basée sur la détection d'un toucher dans une zone d'affichage (4206) dudit afficheur tactile (14) associé audit objet de liaison sélectionné (4205).

3. Procédé selon la revendication 1 ou 2, comprenant en outre :
l'assignation (514) de composants de ressources du véhicule présentement disponibles (16a, 16b, 16c) associés audit système d'info-loisirs (12) audit programme d'application utilisateur sélectionné (33) exécuté, ou sur le point d'être exécuté, sur ledit dispositif nomade (13).

4. Procédé selon la revendication 3, dans lequel lesdits composants de ressources (16a, 16b, 16c) comprennent un microphone, des touches physiques d'info-loisirs (16a) adaptées pour la commande de fonctionnalités dudit système d'info-loisirs (12), des touches physiques de lecteur multimédia (16b) adaptées pour la commande d'une fonctionnalité de lecteur multimédia dudit système d'info-loisirs (12), et/ou des haut-parleurs (16c), ou une combinaison de ces composants, ledit procédé comprenant en outre :
l'utilisation (516) dudit microphone, desdites touches d'info-loisirs (16a) et/ou desdites touches de lecteur multimédia (16b) pour commander ledit programme d'application utilisateur sélectionné (33) ; et/ou
l'utilisation (516) desdits haut-parleurs (16c) pour fournir une sortie audio dudit programme d'application utilisateur sélectionné (33).

5. Procédé selon l'une quelconque des revendications 1 à 4, comprenant en outre :
l'affichage (512), sur ledit afficheur tactile (14), d'un contenu visuel (4309) dudit programme d'application utilisateur sélectionné (33) exécuté sur ledit dispositif nomade (13), pendant qu'au moins un desdits un ou plusieurs objets d'interface utilisateur de catégories (42a, 42b, 42c) est affiché.

6. Procédé selon l'une quelconque des revendications précédentes, ledit procédé comprenant en outre, avant ledit affichage (508) des un ou plusieurs objets de liaison (4204) :
l'affichage (502), sur ledit afficheur tactile (14), pendant qu'au moins un desdits un ou plusieurs objets d'interface utilisateur de catégories (42a, 42b, 42c) est affiché, d'un objet d'interface utilisateur de catégorie nomade (4102) associé audit dispositif nomade (13) ; et
la détermination (504) d'une détection de sélection dudit objet de catégorie nomade (4102).

7. Procédé selon l'une quelconque des revendications précédentes, dans lequel ledit objet de catégorie nomade et/ou un objet de catégorie desdits un ou plusieurs objets d'interface utilisateur de catégories (42a, 42b, 42c) est représenté par une touche virtuelle spécifique respective, et/ou un objet de liaison (4207) desdits un ou plusieurs objets de liaison (4204) est représenté par une icône de programme d'application utilisateur spécifique.

8. Procédé selon l'une quelconque des revendications précédentes, dans lequel lesdites catégories de fonctionnalités d'info-loisirs se rapportent à des applications associées à la navigation, la musique et/ou la téléphonie.

9. Système de gestion d'info-loisirs (11) pour gérer une fonctionnalité d'info-loisirs d'un système d'info-loisirs (12) d'un véhicule (10) auquel peut être connecté un dispositif nomade (13), ledit système de gestion d'info-loisirs (11) comprenant :
une unité d'affichage (21) adaptée pour afficher (501), sur un afficheur tactile (14) associé audit système d'info-loisirs (12), un ou plusieurs objets d'interface utilisateur de catégories (42a, 42b, 42c) associés à des catégories de fonctionnalités d'info-loisirs respectives ;
**caractérisé en ce que**
ladite unité d'affichage (21) est adaptée pour afficher (508), sur ledit afficheur tactile (14), simultanément à au moins un desdits un ou plusieurs un ou plusieurs objets d'interface utilisateur de liaison (4204) simultanément à au moins un desdits un ou plusieurs objets d'interface utilisateur de catégories (42a, 42b, 42c), les un ou plusieurs objets d'interface utilisateur de liaison (4204) se reliant à un ou plusieurs programmes d'application utilisateur (32, 33) hébergés sur ledit dispositif nomade (13), les programmes d'application utilisateur étant pris en charge par ledit système d'info-loisirs (12),
le système de gestion d'info-loisirs (11) étant adapté pour :
déterminer (510) une détection de sélection d'un objet de liaison sélectionné (4205) parmi lesdits objets de liaison (4204) pour appeler un programme d'application utilisateur sélectionné (33) hébergé sur ledit dispositif nomade (13) ; et
afficher (518) une partie d'un contenu visuel associé audit programme d'application utilisateur sélectionné (33) exécuté sur ledit dispositif nomade (13), sur un afficheur supplémentaire (17) dudit véhicule (10) placé devant un conducteur dudit véhicule (10) .

10. Système de gestion d'info-loisirs (11) selon la revendication 9, comprenant en outre ledit afficheur tactile (14).

11. Système de gestion d'info-loisirs (11) selon la revendication 9 ou 10, comprenant en outre :
une unité de connexion (22) adaptée pour permettre la connexion dudit dispositif nomade (13) audit système d'info-loisirs (12), ladite unité de connexion (22) permettant la connexion par l'intermédiaire d'une de connexions sans fil telles que Bluetooth, Wi-Fi, et/ou connexions série infrarouge, et de connexions physiques (18) telles que par fiches USB (Universal Sériai Bus), HDMI/VGA (High-Definition Multimedia Interface / Video Graphics Array), fiches auxiliaires, et/ou fiches personnalisées, ou par l'intermédiaire d'une combinaison de ces connexions.

12. Véhicule (10) comprenant le système de gestion d'info-loisirs (11) selon l'une quelconque des revendications 9 à 11, ledit véhicule (10) comprenant en outre :
un système d'info-loisirs (12) auquel peut être connecté ledit dispositif nomade (13) et auquel est associé ledit afficheur tactile (14), ledit afficheur tactile (14) étant compris dans un écran multifonction (15), un panneau d'instruments, un groupe d'instruments et/ou un tableau de bord dudit véhicule (10).

13. Véhicule (10) selon la revendication 12, ledit véhicule (10) comprenant en outre :
des composants de ressources de véhicule (16a, 16b, 16c) associés audit système d'info-loisirs (12), lesdits composants de ressources (16a, 16b, 16c) comprenant un microphone, des touches physiques d'info-loisirs (16a) adaptées pour la commande de fonctionnalités dudit système d'info-loisirs (12), des touches physiques de lecteur multimédia (16b) adaptées pour la commande d'une fonctionnalité de lecteur multimédia dudit système d'info-loisirs (12), et/ou des haut-parleurs (16c), ou une combinaison de ceux-ci,
dans lequel ledit microphone, lesdites touches d'info-loisirs (16a) et/ou lesdites touches de lecteur multimédia (16b) sont adaptés pour être utilisés (516) pour commander un programme d'application utilisateur sélectionné (33) hébergé sur ledit dispositif nomade (13) ; et/ou
dans lequel lesdits haut-parleurs (16c) sont adaptés pour être utilisés (516) pour fournir une sortie audio dudit programme d'application utilisateur sélectionné (33) hébergé sur ledit dispositif nomade (13) .
